Europäisches Patentamt

**European Patent Office**

Office européen des brevets

(19)

(11) Numéro de publication : **0 209 445**
**B1**

(12) **FASCICULE DE BREVET EUROPÉEN**

(45) Date de publication du fascicule du brevet :
20.09.89

(51) Int. Cl.⁴ : **B 25 B 23/14**

(21) Numéro de dépôt : **86401486.5**

(22) Date de dépôt : **03.07.86**

(54) **Tournevis dynamométrique.**

(30) Priorité : **11.07.85 FR 8510672**

(43) Date de publication de la demande :
**21.01.87 Bulletin 87/04**

(45) Mention de la délivrance du brevet :
**20.09.89 Bulletin 89/38**

(84) Etats contractants désignés :
**DE GB IT SE**

(56) Documents cités :
**FR–A– 1 370 937**
**FR–A– 2 250 403**
**FR–A– 2 353 752**
**FR–A– 2 384 592**

(73) Titulaire : **FACOM, Société dite:**
**6 et 8 Rue Gustave Eiffel**
**F-91423 Morangis Cedex (FR)**

(72) Inventeur : **Dossier, Michel**
**12 Rue Singer**
**F-75016 Paris (FR)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

EP 0 209 445 B1

# Description

La présente invention concerne un tournevis dynamométrique comportant un limiteur de couple à friction et plus particulièrement un limiteur de couple à ressort de torsion du type de celui décrit dans le FR-A-2 250 403, c'est-à-dire un limiteur de couple formé par un ruban hélicoïdal de friction accouplé à ses deux extrémités à un ressort de torsion qui lui est coaxial. Ce limiteur de couple est monté à l'intérieur du manche tubulaire du tournevis entre deux butées axiales de sorte que le ressort de torsion applique le ruban hélicoïdal contre la surface interne du manche. En outre, le ruban hélicoïdal ainsi que le ressort de torsion sont reliés à l'une de leurs extrémités accouplées à la tige de l'outil.

Les tournevis de ce type sont particulièrement sûrs puisque leur limiteur de couple assure à la fois la stabilité du couple de glissement lors de la rotation dans le sens du serrage et une absence de glissement lors d'une rotation dans le sens du desserrage. En outre, le couple de glissement est insensible aux variations du coefficient de frottement. Un problème important est toutefois posé par le réglage du couple de glissement du limiteur de couple. En effet, ce réglage nécessite l'ajustement de la torsion du ressort qui ne peut être effectuée que par des moyens extérieurs de même que la mesure du couple ainsi obtenue.

Or, un tournevis dynamométrique est un outil à main que son utilisateur doit pouvoir régler commodément à tout moment sans outillage accessoire ni banc de mesure auxiliaire.

La présente invention a donc pour but de fournir un tournevis dynamométrique muni d'un limiteur de couple à ressort de torsion qui puisse être facilement réglé par un utilisateur de manière précise et sûre.

Cette invention a en effet pour objet un tournevis dynamométrique comprenant, à l'intérieur d'un manche tubulaire, entre deux butées axiales, un limiteur de couple comportant un ruban hélicoïdal de friction et un ressort de torsion, coaxial à ce ruban et l'appliquant contre la surface interne du manche, qui sont accouplés l'un à l'autre à l'une de leurs extrémités et accouplés à la fois entre eux et à la tige de l'outil à leur autre extrémité, dans lequel le ressort de torsion et le ruban hélicoïdal sont accouplés à la tige de l'outil, par l'intermédiaire de deux bagues reliées à ce dernier par des cannelures d'inclinaisons différentes, tandis qu'un manchon de réglage solidaire axialement du manche est vissé à l'extérieur de ce dernier sur la tige de l'outil de telle sorte que sa rotation en déplaçant axialement cette tige provoque un déplacement angulaire relatif de la bague d'extrémité du ressort par rapport à celle du ruban de friction et règle le calage angulaire relatif de ces extrémités.

Selon un mode de réalisation de l'invention, la bague montée à l'extrémité du ruban de friction est reliée à la tige de l'outil par des cannelures axiales tandis que la bague fixée à l'extrémité du ressort de torsion est reliée à cette même tige par des cannelures hélicoïdales.

Une simple rotation du manchon permet ainsi à l'utilisateur du tournevis de modifier la torsion du ressort et par suite le couple de glissement.

Selon une autre caractéristique de l'invention, le tournevis comporte également un tambour de contrôle du réglage qui est porté par la tige de l'outil et s'emboîte autour du manchon de réglage, des graduations étant prévues sur la face extérieure de ces deux organes.

La valeur du couple de glissement obtenue est ainsi automatiquement connue par l'utilisateur au fur et à mesure de son réglage.

La description ci-dessous d'un mode de réalisation, donné à titre d'exemple non limitatif, et représenté aux dessins annexés, fera d'ailleurs ressortir les caractéristiques et avantages de l'invention. Sur les dessins :

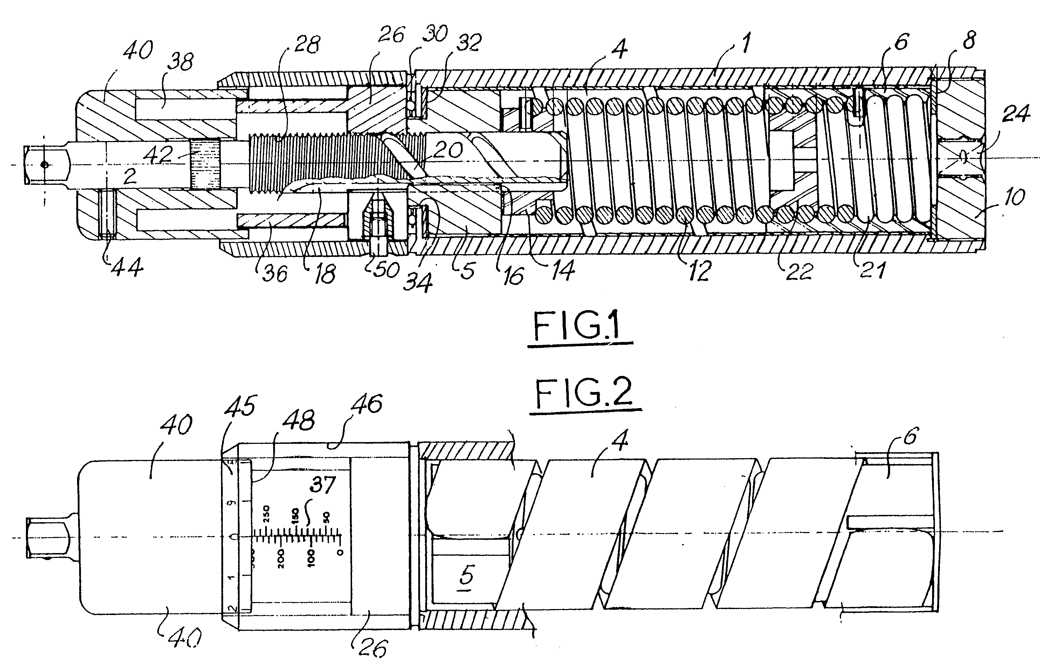

— la Figure 1 est une vue en coupe longitudinale d'un tournevis dynamométrique selon l'invention ;

— la Figure 2 est une vue latérale de ce même tournevis dont le manche tubulaire a été partiellement arraché pour faire apparaître le ruban hélicoïdal de friction.

Ce tournevis dynamométrique comporte un manche tubulaire 1 d'entraînement qui est relié à une tige 2 d'entraînement de l'outil par un limiteur de couple à ressort de torsion. En effet, à l'intérieur du manche 1 est monté un ruban hélicoïdal 4 en butée tangentielle à l'une de ses extrémités sur une bague 5 et à son autre extrémité sur un fourreau 6 en appui contre une rondelle 8 maintenue par le fond 10 du manche 1. Un ressort de torsion 12, constitué dans le mode de réalisation représenté par un ressort à boudin, est monté coaxialement au ruban hélicoïdal 4 et fixé à l'une de ses extrémités dans le fourreau 6 et à son autre extrémité sur une bague 14 en appui contre la bague 5. Les deux bagues 5 et 14 sont en outre reliées à la tige 2 par des cannelures. La bague 5 comporte au moins une nervure 16 engagée dans une cannelure axiale 18 de la tige 2 et est ainsi solidaire de cette tige en rotation. La bague 14 est-elle reliée à la tige 2 par l'intermédiaire d'une cannelure ou rainure hélicoïdale 20 qui est ménagée dans cette tige et dans laquelle coulisse une cannelure solidaire de la bague 14 (cette cannelure n'est toutefois pas visible sur les dessins).

La rotation du manche 1 est ainsi transmise à la tige 2 par l'intermédiaire du ruban hélicoïdal 4 et de la bague 5, le ressort de torsion 12 appliquant le ruban hélicoïdal 4 contre la surface interne du manche jusqu'au moment où le couple de glissement est atteint.

De préférence, le fourreau 6 comporte une gorge interne hélicoïdale 21 dans laquelle s'emboîtent les spires extrêmes du ressort 12. En outre, un noyau 22 muni d'une gorge analogue sur sa face extérieure est vissé à l'intérieur de ce fourreau 6 sur les spires du ressort qu'elle immobilise. La longueur efficace du ressort de torsion 12, et par suite son élasticité, est ainsi déterminée par la longueur des spires qui séparent le noyau 22 de la bague 14. Un réglage de la position de ce noyau 22 peut être effectué en introduisant un outil depuis l'extérieur par un orifice 24 ménagé dans le fond 10 du manche 1.

A son extrémité opposée à ce fond 10 le manche 1 porte un manchon de réglage 26 qui est vissé sur un filetage correspondant 28 de la tige 2. Il est solidaire axialement du manche 1 auquel il est relié par une butée à billes 30 montée entre lui et une rondelle 32 autour d'un prolongement axial 34 de la bague 5 avec lequel il est en contact.

De préférence, le tambour 26 est prolongé par une jupe 36 qui porte une graduation longitudinale 37 au pas du filetage 28 taillé sur la tige 2. La jupe 36 pénètre à son extrémité dans un évidement circulaire 38 d'un tambour de contrôle 40 relié à la tige 2 par des cannelures axiales 42 permettant le réglage de sa position axiale et angulaire mais rendu solidaire de cette tige par une vis de blocage 44. La surface externe du tambour 44 porte à son extrémité voisine de la jupe 36 une graduation circulaire 45 graduée par exemple en dixième de tours. Cette graduation 45 de même que le bord du tambour 40 viennent se placer devant la jupe 36 en un point déterminé de la graduation 37 selon la position relative du manchon 26 et du tambour 40. Un fourreau extérieur transparent 46 fixé sur le manchon 26 dans le prolongement du manche 1 protège la jupe 36 et une partie du tambour 40 tout en permettant la lecture des graduations portées par ces deux organes. En outre, ce fourreau 46 porte un bouton de commande d'un dispositif de blocage 50 assurant la solidarisation du manchon 26 et de la tige 2.

Lorsqu'un utilisateur du tournevis veut régler ce dernier pour un couple de glissement déterminé, il lui suffit, après avoir libéré le dispositif de blocage 50, de faire tourner le fourreau 46 et le manchon 26 qui en est solidaire, ce qui provoque un déplacement axial de la tige 2. Cette tige coulisse dans la bague 5 qui reste immobile tandis qu'elle provoque un déplacement angulaire de la bague 14 dont la cannelure est entraînée par la rainure hélicoïdale 20, le calage angulaire de cette bague 14 par rapport à la bague 5 d'extrémité du ruban de friction est ainsi modifié de même que la torsion du ressort 12.

Au fur et à mesure de la rotation du manchon 26 le manchon 40 s'est déplacé axialement en même temps que la tige 2 de sorte que son bord extrême 48 a parcouru une partie de la graduation 37 qui correspond exactement au nombre de tours effectué par le manchon 26. Par ailleurs, l'axe de la graduation 37 s'est déplacé angulairement par rapport à la graduation 45 de sorte que la combinaison des deux graduations donne la mesure exacte du déplacement de la tige 2 et par conséquent de la modification de la torsion du ressort et du couple de glissement qui en résulte.

Ces graduations donnent directement les valeurs de ce couple de glissement et dès que le couple désiré est atteint, une pression sur le bouton de commande du dispositif de blocage 50 remet celui-ci en action, ce qui immobilise le manchon 26 par rapport à la tige 2 et interdit tout risque de modification du réglage.

Le tournevis est alors prêt à être utilisé c'est-à-dire à fonctionner de la manière habituelle, le manche 1 entraînant par friction le ruban hélicoïdal 4 et la bague 5 qui provoque la rotation de la tige 2 désormais solidaire du manchon 26.

Bien entendu, les cannelures qui relient les bagues 5 et 14 à la tige 2 peuvent avoir des formes autres que celles qui viennent d'être décrites dans la mesure où les cannelures reliant chacune des deux bagues ont des inclinaisons différentes et provoquent un déplacement angulaire relatif de ces deux bagues lorsque la tige 2 effectue un déplacement axial. Par exemple, la bague 5 d'extrémité du ruban hélicoïdal peut être reliée à la tige 2 par des cannelures hélicoïdales, tandis que la bague 14 lui est reliée par des cannelures axiales ou par d'autres cannelures hélicoïdales ayant un pas différent. Dans certains cas, même la bague 14 peut être fixée à la tige 2, tandis que l'autre est reliée à cette tige par des cannelures hélicoïdales.

Quel que soit le mode de réalisation choisi, la rotation du manchon de réglage 26 autour de la tige 2 entraîne une modification du calage angulaire relatif des deux bagues d'extrémité 5, 14, tandis que la rotation du manche d'entraînement 1 provoque une rotation simultanée de la bague 5 et de la tige 2 jusqu'à l'apparition du couple de glissement.

On dispose donc d'un tournevis dynamométrique qui présente toute la sûreté de fonctionnement du limiteur de couple à ressort de torsion et en outre peut à tout moment être réglé par un utilisateur de manière simple et précise.

**Revendications**

1. Tournevis dynamométrique comportant, à l'intérieur d'un manche tubulaire (1), entre deux butées axiales, un limiteur de couple comprenant un ruban hélicoïdal de friction (4) et un ressort de torsion (12), coaxial au ruban et l'appliquant contre la surface interne du manche (1), qui sont accouplés l'un à l'autre à l'une de leurs extrémités (6) et accouplés à la fois entre eux et à la tige (2) de l'outil à leur autre extrémité, caractérisé en ce que le ressort de torsion (12) et le ruban de friction (4) sont accouplés à la tige (2) de l'outil, par l'intermédiaire de deux bagues (5, 14) reliées à cette tige par des cannelures (18, 20) d'inclinaisons différentes, les cannelures de liaison de l'une au moins des bagues étant hélicoïdales, tandis qu'un manchon de réglage (26) solidaire axialement du manche (1) est vissé à l'extrémité de ce dernier sur la tige (2) de l'outil, de telle sorte que la rotation de ce manchon en déplaçant axialement la tige (2) provoque un déplacement angulaire relatif de la bague (14) d'extrémité du ressort par rapport à la bague (5) d'extrémité du ruban de friction.

2. Tournevis suivant la revendication 1, caractérisé en ce que la bague (5) d'extrémité du ruban de friction comporte une nervure (16) engagée dans une cannelure axiale (18) de la tige (2) de l'outil tandis que la bague (14) d'extrémité du ressort de torsion comporte une cannelure mobile dans une rainure hélicoïdale (20) de cette tige.

3. Tournevis suivant la revendication 1, caractérisé en ce que les bagues (5, 14) d'extrémité respectivement du ruban de friction et du ressort de torsion comportent chacune une cannelure qui coopère avec une cannelure hélicoïdale de la tige de l'outil, les deux cannelures ayant des pas différents.

4. Tournevis suivant l'une des revendications 1 à 3, caractérisé en ce qu'il comporte en outre un tambour de contrôle (40) qui est monté sur la tige (2) de l'outil, s'emboîte sur le manchon de réglage (26) et porte à son extrémité interne une graduation circulaire (45).

5. Tournevis suivant la revendication 4, caractérisé en ce que le tambour de contrôle (40) est emboîté sur une jupe (36) de prolongement du manchon qui porte une graduation longitudinale (37).

6. Tournevis suivant l'une des revendications précédentes, caractérisé en ce que le manchon de réglage est solidaire d'un fourreau transparent (46) qui l'entoure dans le prolongement du manche (1).

7. Tournevis suivant l'une des revendications précédentes, caractérisé en ce qu'il comporte en outre un dispositif de blocage rétractable (50) qui est commandé depuis l'extérieur et assure la solidarisation du manchon 26 et de la tige 2 pendant l'utilisation de l'outil.

8. Tournevis suivant l'une des revendications précédentes, caractérisé en ce que l'extrémité du ressort de torsion qui est éloignée de la tige (2) de l'outil est fixée dans un fourreau (6) et est bloquée dans ce fourreau par un noyau (22) dont la position règle la longueur active du ressort.

9. Tournevis dynamométrique selon la revendication 8, caractérisé en ce que le fourreau (6) comporte une gorge interne hélicoïdale de réception des spires du ressort (12) tandis que le noyau (22) comporte une gorge externe hélicoïdale correspondante et est vissé à l'intérieur de ces spires.

## Claims

1. Torque screwdriver comprising, within a tubular handle (1) and between two axial abutments, a torque limiter comprising a helical friction band (4) and a torsion spring (12) coaxial to the band and the application thereof against the inner surface of the handle (1), which are coupled to one another by their ends (6) and coupled both to one another and to the rod (2) of the tool by their other end, characterized in that the torsion spring (12) and the friction band (4) are coupled to the rod (2) of the tool, via two rings (5, 14) connected to said rod by splines (18, 20) having different inclinations, the connecting splines of at least one of the rings being helical, whilst a regulating sleeve (26) axially integral with handle (1) is screwed to the end of the latter on the tool rod (2), in such a way that the rotation of said sleeve whilst axially displacing rod (2) causes a relative angular displacement of the end ring (14) of the spring with respect to the end ring (15) of the friction band.

2. Screwdriver according to claim 1, characterized in that the end ring (5) of the friction band has a rib (16) engaged in an axial spline (18) of the tool rod (2), whilst the end ring (14) of the torsion spring has a mobile spline in a helical groove (20) of said rod.

3. Screwdriver according to claim 1, characterized in that the end rings (5, 14) respectively of the friction band and the torsion spring have in each case a spline cooperating with a helical spline of the tool rod, the two splines having different pitches.

4. Screwdriver according to one of the claims 1 to 3, characterized in that it also has a control drum (40) mounted on the tool rod (2), which is fitted onto the regulating sleeve (26) and carries at its inner end a circular graduation (45).

5. Screwdriver according to claim 4, characterized in that the control drum (40) is fitted onto a skirt (36) extending the sleeve and which carries a longitudinal graduation (37).

6. Screwdriver according to one of the preceding claims, characterized in that the regulating sleeve is integral with a transparent sheath (46) which surrounds it in the extension of handle (1).

7. Screwdriver according to one of the preceding claims, characterized in that it also has a retractable locking device (50), which is controlled from the outside and which ensures the joining together of sleeve (26) and rod (2) when the tool is being used.

8. Screwdriver according to one of the preceding claims, characterized in that the end of the torsion spring remote from the tool rod (2) is fixed in a bushing (6) and is locked in the latter by a core member (22), whose position regulates the active length of the spring.

9. Torque screwdriver according to claim 8, characterized in that the bushing (6) has a helical inner groove for receiving the coils of spring (12), whilst the core member (22) has a corresponding helical outer groove and is screwed into the interior of said coils.

## Patentansprüche

1. Drehmomentschrauber, der im Inneren einer rohrförmigen Manschette (1) zwischen zwei axialen Anschlägen einen Drehmomentbegrenzer aufweist, der ein schraubenförmiges Reibband (4) und eine Torsionsfeder (12) aufweist, die koaxial zum Reibband verläuft und sich auf der inneren Oberfläche der Manschette (1) abstützt, welche miteinander an einem ihrer Enden (6) verbunden sind und gleichzeitig untereinander und mit der Werkzeugstange (2) an ihrem anderen Ende verbunden sind, dadurch gekennzeichnet, daß die Torsionsfeder (12) und das Reibband (4) mit der Stange (2) des Werkzeugs (2) mittels zweier Ringe (5, 14) verbunden sind, die mit der Stange durch Kerben (18, 20) mit unterschiedlicher Neigung verbunden sind, wobei die Verbindungskerben wenigstens einer der Ringe schraubenförmig sind, während eine Regelungsmanschette (26), die axial mit der Manschette (1) verbunden ist, am Ende der letzteren auf die Stange (2) des Werkzeugs derart aufgeschraubt ist, daß die Drehung dieser Manschette bei axialer Bewegung der Stange (2) eine relative Winkelbewegung des Rings (14) des Federendes bezüglich des Rings (5) des Reibbandendes hervorruft.

2. Drehmomentschrauber nach Anspruch 1, dadurch gekennzeichnet, daß der Reibbandendring (5) eine Kerbe (16) aufweist, die in Eingriff steht mit der axialen Kerbe (18) der Stange (2) des Werkzeugs, während der Torsionsfederendring (14) eine Kerbe aufweist, die in einer schraubenförmigen Nut (20) der Stange bewegbar ist.

3. Drehmomentschrauber nach Anspruch 1, dadurch gekennzeichnet, daß die Ringe (5, 14) des Reibbandendes bzw. Torsionsfederendes jeder eine Kerbe aufweist, die mit einer schraubenförmigen Kerbe der Stange des Werkzeugszusammenwirkt, wobei die beiden Kerben unterschiedliche Steigung haben.

4. Drehmomentschrauber nach einem der Ansprüche 1 bis 3, dadurch gekennzeichnet, daß er weiterhin eine Steuertrommel (40) aufweist, die auf der Werkzeugstange (2) angebracht ist, und sich um die Regelungsmanschette (26) erstreckt und an seinem inneren Ende eine kreisförmige Meßskala (45) aufweist.

5. Drehmomentschrauber nach Anspruch 4, dadurch gekennzeichnet, daß die Steuertrommel (40) auf einer Schürze (36) der Verlängerung der Manschette gelagert ist, die eine Längsmeßskala (37) trägt.

6. Drehmomentschrauber nach einem der vorhergehenden Ansprüche, dadurch gekennzeichnet, daß die Regelungsmanschette mit einer durchsichtigen Hülse (46) verbunden ist, die sie in der Verlängerung der Manschette (1) umgibt.

7. Drehmomentschrauber nach einem der vorhergehenden Ansprüche, dadurch gekennzeichnet, daß er weiterhin eine einziehbare Blockierungsvorrichtung (50) aufweist, die von außen betätigt wird und die Verbindung der Manschette (26) und der Stange (2) während des Gebrauchs des Werkzeugs sicherstellt.

8. Drehmomentschrauber nach einem der vorhergehenden Ansprüche, dadurch gekennzeichnet, daß das Ende der Torsionsfeder, das von der Stange (2) entfernt ist, in einer Hülse (6) befestigt ist, und in dieser Hülse durch einen Kern (22) blockiert ist, dessen Position die aktive Länge der Feder einstellt.

9. Drehmomentschrauber nach Anspruch 8, dadurch gekennzeichnet, daß die Hülse (6) eine innere schraubenförmige Kehle zur Aufnahme der Schraubengänge der Feder (12) aufweist, während der Kern (22) eine entsprechende äußere schraubenförmige Kehle aufweist und innen in die Windungen eingeschraubt ist.

FIG.1

FIG.2